Europäisches Patentamt

European Patent Office

Office européen des brevets

(11) Veröffentlichungsnummer: **0 458 188 A1**

## (12) EUROPÄISCHE PATENTANMELDUNG

(21) Anmeldenummer: **91107918.4**

(22) Anmeldetag: **16.05.91**

(51) Int. Cl.⁵: **G01N 30/56**

(30) Priorität: **25.05.90 DE 4016760**

(43) Veröffentlichungstag der Anmeldung:
**27.11.91 Patentblatt 91/48**

(84) Benannte Vertragsstaaten:
**BE CH DE DK FR GB IT LI NL SE**

(71) Anmelder: **MERCK PATENT GESELLSCHAFT
MIT BESCHRÄNKTER HAFTUNG
Frankfurter Strasse 250 Postfach 4119
W-6100 Darmstadt(DE)**

(72) Erfinder: **Kreher, Klaus
Bahnhofsplatz 22
W-6115 Münster(DE)**
Erfinder: **Münch, Gerhard
Ostring 9
W-6114 Gross-Umstadt(DE)**
Erfinder: **Rogler, Ernst, Dr.
Van der Grube 9
W-6108 Weiterstadt 1(DE)**

(54) **Chromatographieanlagen.**

(57) Chromatographieanlagen mit Vorrichtungen für die Verpressung der Säulenpackung und/oder für die Pulsationsdämpfung wurden verbessert durch den Einbau einer zusätzlichen Vorrichtung, in der ein vorgewählter Mindestdruck, der unabhängig vom Eluentendruck ist, mit einer zweiten Druckkomponente kombiniert wird, die proportional dem Eluentendruck ist.

EP 0 458 188 A1

Gegenstand der Erfindung sind neue verbesserte Chromatographieanlagen mindestens bestehend aus einer Chromatographiesäule mit einer Vorrichtung zur axialen Verpressung der Säulenpackung und/oder aus einer Pulsationsdämpfungsvorrichtung und aus einer Elutionsvorrichtung.

Bei chromatographischen Trennungen von Substanzen, besonders bei der Flüssigkeitschromatographie, werden abhängig von der gewünschten Durchflußrate, der Zähigkeit des Elutionsmittels und des Strömungswiderstandes besonders der Trennsäule unterschiedliche Drücke für die Zufuhr des Elutionsmittels notwendig.

Das Einwirken der wechselnden Betriebsdrücke auf das Trennmaterial in der Säule führt zu dessen Belastung, so daß sich die Reproduzierbarkeit von Trennläufen und die Standzeit des Säulenmaterials verschlechtern.

Eine Methode zur Lösung dieses Problems ist in EP 0 271 378 offenbart: Das Elutionsmittel sorgt mit seinem eigenen Druck über eine Druckübersetzungseinrichtung und eine Vorrichtung zum Verpressen des Trennmaterials für den notwendigen Gegendruck, der sich automatisch dem Betriebszustand der Chromatographieanlage anpaßt. Allerdings bricht dieser Verpressungsdruck beim Abschalten oder beim Ausfall der Elutionsmittelpumpe zusammen. Dadurch wird in diesen Fällen das Trennmaterial in der Säule weiterhin durch aufeinanderfolgendes Verpressen und Entspannen mechanisch in nachteiliger Weise belastet.

Ein weiteres Problem besteht darin, daß Elutionsmittelpumpen nicht pulsationsfrei arbeiten, so daß auch hierdurch eine mechanische Belastung des gesamten Systems erfolgt. Die zur Dämpfung der Druckimpulse eingesetzten Pulsationsdämpfungsvorrichtungen arbeiten nur in einem engen Druckbereich und verlieren daher unter wechselnden Betriebsbedingungen an Wirksamkeit, da der Druck des Elutionsmittels sich in weiten Bereichen (ca. 10 bis 250 bar) ändern kann.

Es wurde nun gefunden, daß verbesserte Chromatographieanlagen bereitgestellt werden können, wenn Bauelemente wie Verpressungs- oder Pulsationsdämpfungsvorrichtung mit einem Druck beaufschlagt werden, der sich aus einer Druckkomponente, die proportional dem Druck des Elutionsmittels ist, und einer zusätzlichen konstanten Druckkomponente zusammensetzt.

Gegenstand der Erfindung sind daher Chromatographieanlagen mindestens bestehend aus einer Chromatographiesäule mit einer Vorrichtung zur axialen Verpressung der Säulenpackung und/oder einer Pulsationsdämpfungsvorrichtung und aus einer Elutionsvorrichtung, dadurch gekennzeichnet, daß zusätzlich eine Vorrichtung vorgesehen ist, die einen vorgewählten Mindestdruck, der unabhängig vom Eluentendruck ist, mit einer zweiten Druckkomponente kombiniert, die proportional dem Eluentendruck ist.

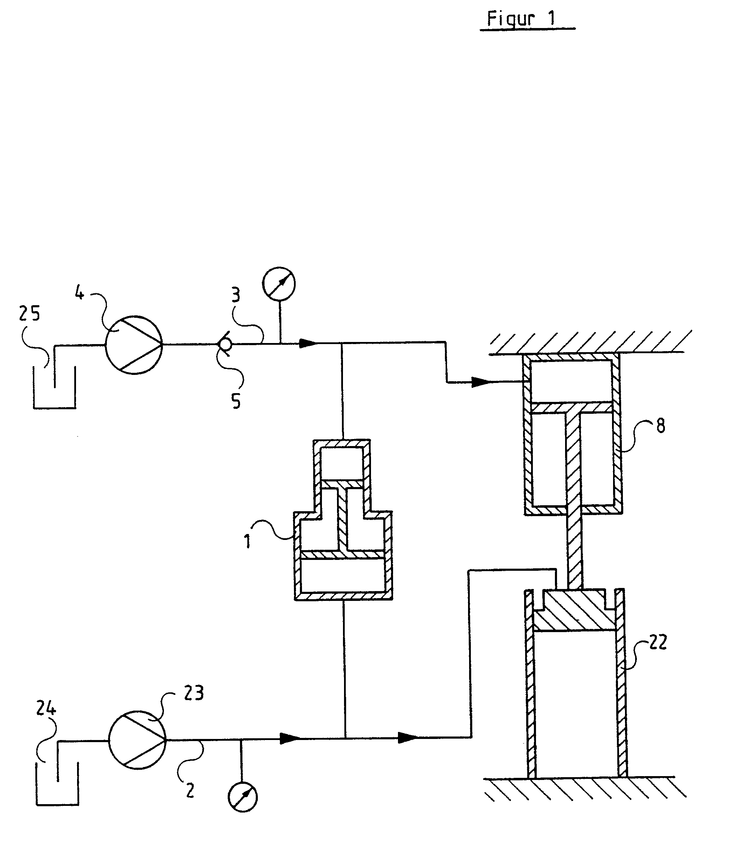

Es wurde gefunden, daß die Aufgabe erfindungsgemäß gelöst werden kann, indem man das Arbeitsmittel, z.B. Hydrauliköl oder ein Gas wie Luft, einer Druckübersetzungsvorrichtung aussetzt und zusätzlioh eine Vorrichtung zur Erzeugung eines konstanten Druckes, z.B. eine Pumpe oder einen federgespannten beweglichen Kolben in einem Zylinder, einwirken läßt. Einzelheiten der Erfindung sind beispielsweise in den Abbildungen 1 bis 6 ausgeführt.

Gegenstand der Erfindung sind weiterhin chromatographische Trennverfahren, dadurch gekennzeichnet, daß eine erfindungsgemäße Chromatographieanlage benutzt wird.

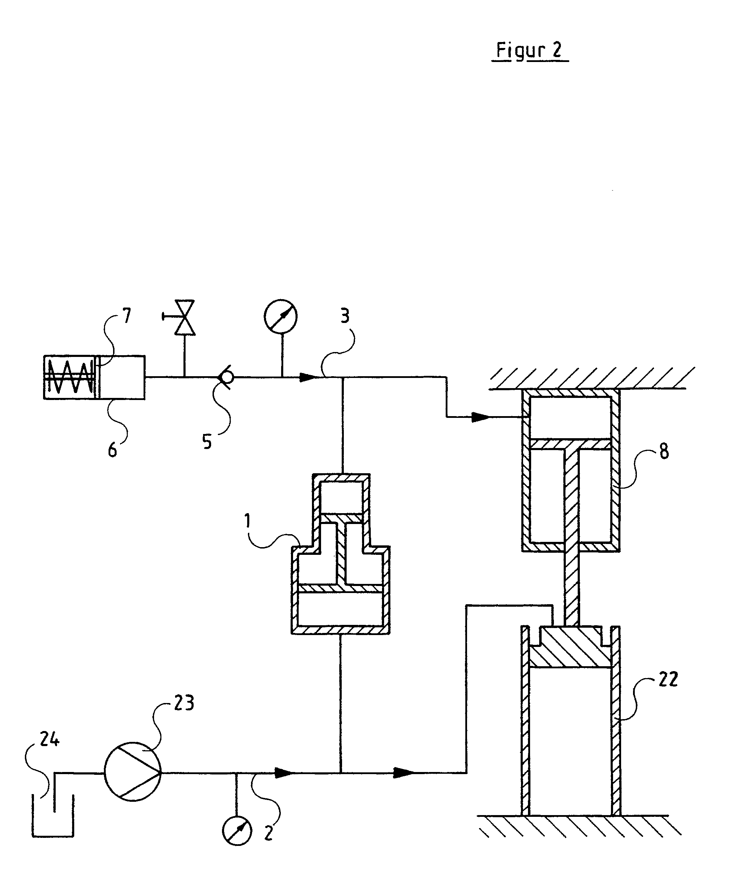

Eine erfindungsgemäße Chromatographieanlage entsprechend dem Anspruch 2 ist in den Figuren 1 und 2 dargestellt und enthält im wesentlichen folgende Elemente: zumindest eine Druckübersetzungsvorrichtung (1), die den Druck des Elutionsmittels (2) mit einem geeigneten Übersetzungsverhältnis auf eine Hydraulikflüssigkeit (3) überträgt, so daß die Kraft, die auf den Kolben der Verpressungseinrichtung (8) wirkt, um einen Faktor im Bereich 1,05 bis 1,6, vorzugsweise 1,2-1,4, größer ist als die Kraft, die auf der Eluatseite wirksam wird. Solange der am Druckübersetzer auf der Seite des Hydrauliköles anstehende Druck geringer ist als der vorgewählte Verpressungsdruck, sorgt eine Vorrichtung für einen konstanten Druck. Es sind verschiedene derartige Vorrichtungen in der Technik bekannt und können erfindungsgemäß eingesetzt werden. Beispielhaft für solche Vorrichtungen, zeigt Figur 1 eine Pumpe (4) mit einem Rückschlagventil (5) und einem Vorratsgefäß für Hydraulikflüssigkeit (25). Figur 2 zeigt als ein weiteres Beispiel einen Zylinder (6) mit beweglichen Kolben (7), der unter einer einstellbaren Federspannung steht. Die Chromatographiesäule ist mit (22), die Elutionspumpe mit (23) und das Elutionsmittelvorratsgefäß mit (24) bezeichnet.

In jedem Fall sorgt eine derartige Vorrichtung für den vorgesehenen Mindestverpressungsdruck. Erhöht sich der Elutionsmitteldruck, so daß der am Druckübersetzer (1) auf der Seite des Hydrauliköles anstehende Druck größer ist als der vorgewählte Verpressungsdruck, so schließt sich das Rückschlagventil (5), und die Säulenpackung wird mit dem notwendigen erhöhten Verpressungsdruck beaufschlagt.

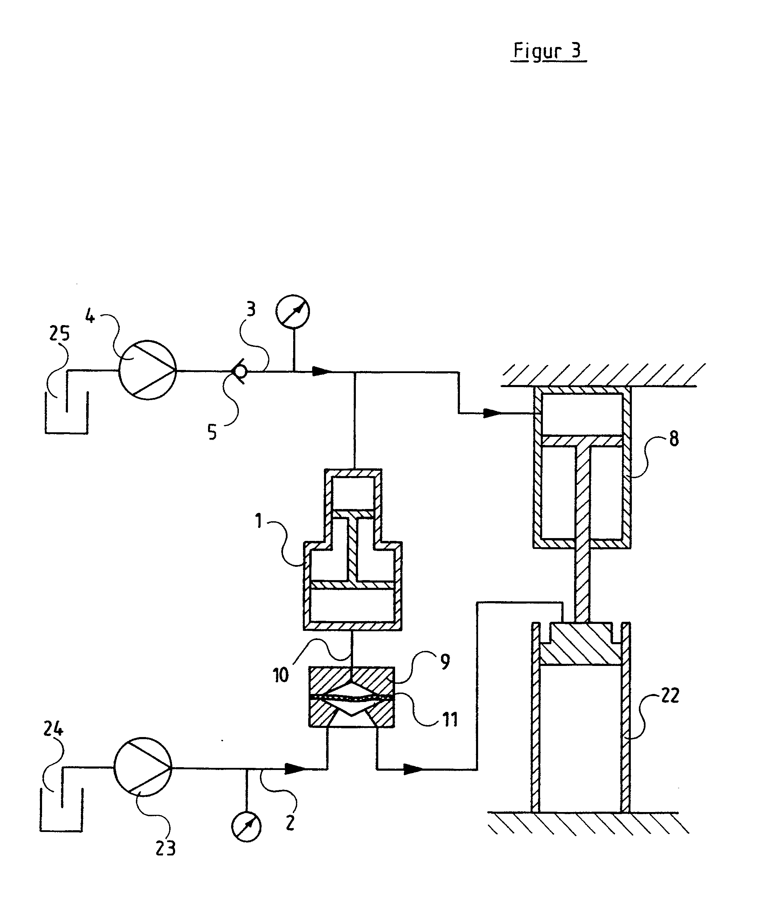

Eine bevorzugte Ausführungsform der erfindungsgemäßen Chromatographieanlage ist in Figur 3 dargestellt. Dabei wird zusätzlich zwischen das Elutionsmittel (2) und der Druckübersetzungsvorrichtung (1) eine Druckübertragungsvorrichtung (9) geschaltet. Diese überträgt den Druck des Elutionsmittels (2) auf eine Hydraulikflüssigkeit (10), die durch eine lösungsmittelfeste und elastische Membran (11) vom Elutionsmittel abgetrennt ist.

Diese bevorzugte Ausführungsform weist gegenüber dem Stand der Technik, wie er z.B. in der Druckschrift EP 0 271 378 offenbart ist, weitere wichtige Vorzüge auf: Auf der Elutionsmittelseite ist das Totvolumen erheblich verkleinert, außerdem durchströmt das Elutionsmittel die Druckübertragungseinrichtung. Deswegen treten beim Wechsel des Elutionsmittels, z.B. bei der häufig benutzten Gradientenelution, keine Störungen des Gradienten durch Durchmischung auf. Im übrigen sind derartige Membranen besser gegen die verwendeten Elutionsmittel resistent und weisen auch weniger häufig Lecks auf als es bei gleitenden Dichtungen der Fall ist.

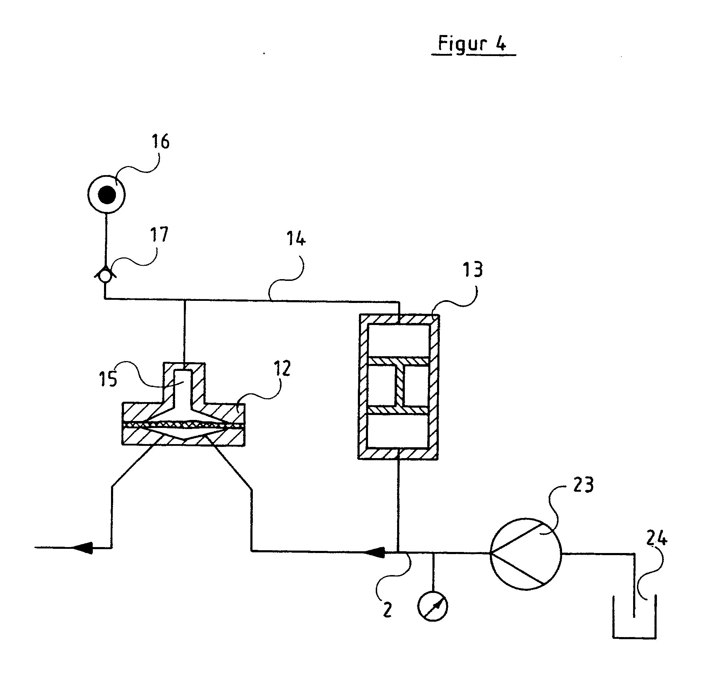

Bei einer anderen Ausführungsform der Erfindung nach Anspruch 4 wird, wie in Figur 4 dargestellt, eine Pulsationsdämpfungsvorrichtung (12) mit einer Druckübersetzungsvorrichtung (13) ausgerüstet. Diese uberträgt den Druck des Elutionsmittels (2) auf ein Gas, z.B. Luft (14), mit dem die eine Kammer (15) des Pulsationsdämpfers gefüllt ist. Zusätzlich ist eine Vorrichtung zum Erzeugen eines konstanten Druckes, z.B. Kompressor (16) mit einem Rückschlagventil (17), vorhanden, um die Kammer (15) der Pulsationsdämpfungsvorrichtung mit einem Mindestdruck zu versorgen.

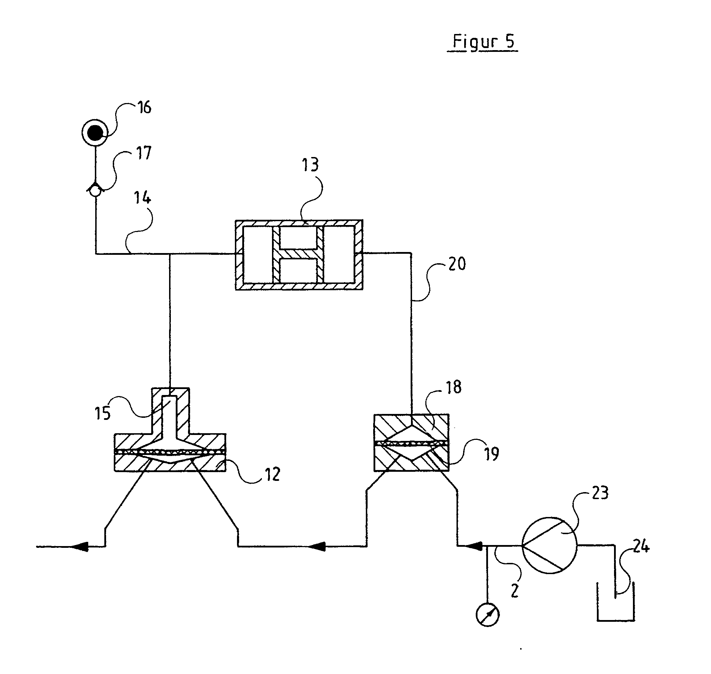

Eine bevorzugte Ausführungsform der zuletzt beschriebenen Einrichtung (siehe Figur 5) enthält eine zusätzliche Drückübertragungsvorrichtung (18), die den Druck des Elutionsmittels (2) unter Verwendung einer lösungsmittelfesten und elastischen Membran (19) auf eine Hydraulikflüssigkeit (20) überträgt. Letztere überträgt den Druck über die Drückübersetzungsvorrichtung (13) auf die Luft (14) mit der eine Kammer (15) der Pulsationsdämpfungsvorrichtung (12) gefüllt ist.

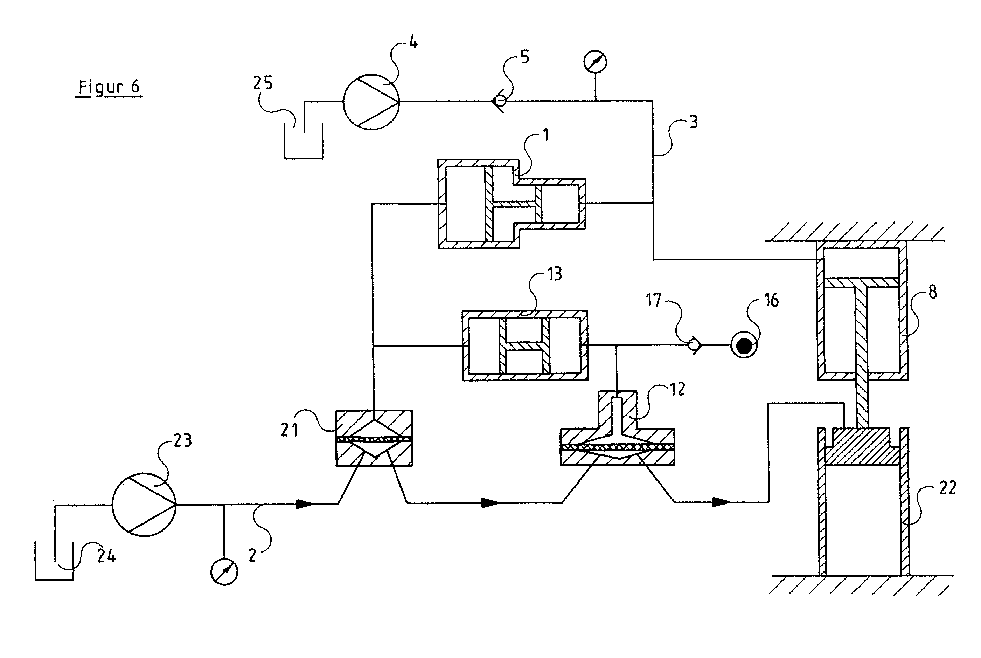

In einer weiteren möglichen Ausführungsform (siehe Figur 6) dient eine gemeinsame Druckübertragungsvorrichtung (21) für beide Einrichtungen: sowohl für die Verpressungs-, als auch für die Pulsationsvorrichtung.

**Patentansprüche**

1. Chromatographieanlage mindestens bestehend aus einer Chromatographiesäule mit einer Vorrichtung zur axialen Verpressung der Säulenpackung und/oder einer Pulsationsdämpfungsvorrichtung und aus einer Elutionsvorrichtung, dadurch gekennzeichnet, daß zusätzlich eine Vorrichtung vorgesehen ist, die einen vorgewählten Mindestdruck, der unabhängig vom Eluentendruck ist, mit einer zweiten Druckkomponente kombiniert, die proportional dem Eluentendruck ist.

2. Chromatographieanlage nach Anspruch 1 mit einer Vorrichtung zur axialen Verpressung der Säulenpackung mit einem Druck proportional dem Eluentendruck mit Hilfe von mindestens einem beweglichen Kolben mit Druckübersetzungsvorrichtung, dadurch gekennzeichnet, daß die zusätzliche Vorrichtung einen Druck in dem Hydrauliksystem erzeugt, das zur Verpressung der Säulenpackung dient.

3. Chromatographieanlage nach Anspruch 2, dadurch gekennzeichnet, daß vor die Druckübersetzungsvorrichtung eine durchströmte Druckübertragungsvorrichtung geschaltet ist.

4. Chromatographieanlage nach Anspruch 1 mit einem Pulsationsdämpfer, dadurch gekennzeichnet, daß der Pulsationsdämpfer mit einer Druckübersetzungsvorrichtung versehen ist, durch die er mit einem Gegendruck beaufschlagt wird, der proportional dem Eluentendruck ist.

5. Chromatographieanlage nach Anspruch 4, dadurch gekennzeichnet, daß vor die Druckübersetzungsvorrichtung des Pulsationsdämpfers eine durchströmte Druckübertragungsvorrichtung geschaltet ist.

6. Chromatographieanlage nach den Ansprüchen 3 und 5, dadurch gekennzeichnet, daß eine durchströmte Druckübertragungsvorrichtung gemeinsam für die Einstellung des Verpressungsdruckes und für die Einstellung des Gegendruckes des Pulsationsdämpfers benutzt wird.

7. Verfahren zur chromatographischen Auftrennung von Stoffgemischen, dadurch gekennzeichnet, daß eine Chromatographieanlage nach den Ansprüchen 1-6 benutzt wird.

Figur 1

Figur 2

Figur 3

## Figur 4

Figur 5

Figur 6

EP 0 458 188 A1

# EUROPÄISCHER
# RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 330 503   (TOSOH CORPORATION) <br> * Ansprüche 1, 2, 5; Figur 3 * <br> – – – | 1 | G 01 N 30/56 |
| A | PATENT ABSTRACTS OF JAPAN vol. 11, no. 226 (P-598)(2673) 23 Juli 1987, <br> & JP-A-62 42050 (KURITA WATER IND LTD) 24 Februar 1987, <br> * das ganze Dokument * <br> – – – | 1 | |
| A,D | EP-A-0 271 378   (F.COUILLARD) <br> * das ganze Dokument * <br> – – – | 1-7 | |
| A | DE-C-3 306 631   (HEWLETT-PACKARD GMBH) <br> * das ganze Dokument * <br> – – – – – | 1 | |

| RECHERCHIERTE SACHGEBIETE (Int. Cl.5) |
|---|
| G 01 N <br> B 01 D |

Der vorliegende Recherchenbericht wurde für alle Patentansprüche erstellt

| Recherchenort | Abschlußdatum der Recherche | Prüfer |
|---|---|---|
| Berlin | 28 August 91 | BERTRAM H E H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument